# EUROPÄISCHE PATENTSCHRIFT

(11) **EP 1 506 070 B1**
(45) Veröffentlichungstag und Bekanntmachung des Hinweises auf die Patenterteilung: **04.10.2006**
(21) Anmeldenummer: 03732399.5
(22) Anmeldetag: 16.05.2003
(51) Int. Cl.: B23C 5/10, B23Q 11/00, B23C 5/28, B23Q 1/00

(54) **FR SWERKZEUG**
MILLING CUTTER
OUTIL DE FRAISAGE

(30) Priorität: 17.05.2002 DE 10222040
(43) Veröffentlichungstag der Anmeldung: 16.02.2005
(73) Patentinhaber: Kennamental Inc., Latrobe, PA 15650-0231 (US)
(72) Erfinder: KAMMERMEIER, Dirk, 90547 Stein (DE); MERGENTHALER, Peter, 91477 Markt Bibart (DE)
(74) Vertreter: Tergau & Pohl Patentanwälte
(86) Internationale Anmeldenummer: PCT/EP2003/005191
(87) Internationale Veröffentlichungsnummer: WO 2003/097283

(56) Entgegenhaltungen:
- DE-A- 3 143 847
- DE-C- 19 512 401
- US-A- 2 437 668
- US-A- 4 543 019
- US-A- 5 433 655
- US-A- 5 759 185
- PATENT ABSTRACTS OF JAPAN vol. 2002, no. 10, 10. Oktober 2002 (2002-10-10) -& JP 2002 166320 A (NIPPEI TOYAMA CORP), 11. Juni 2002 (2002-06-11)
- SANDVIK COROMANT: "ROTATING TOOLS CATALOGUE" Februar 2001 (2001-02) , SANDVIK COROMANT UK , HALESOWEN, ENGLAND XP002253956 Seite A137 - Seite A139 Seite 137 -Seite 139
- PATENT ABSTRACTS OF JAPAN vol. 012, no. 052 (M-668), 17. Februar 1988 (1988-02-17) -& JP 62 199339 A (BUNJI MATSUMOTO), 3. September 1987 (1987-09-03)

## Beschreibung

Die Erfindung betrifft ein Fräswerkzeug, insbesondere zur Leichtmetallbearbeitung, mit einem Schaft und einem Fräskopf, nach dem Oberbegriff des Anspruchs 1. Ein derartiges Fräswerkzeug ist beispielsweise aus der US-A-5,759,185 bekannt.

Das aus der US-A-5,759,185 bekannte Fräswerkzeug ist ein Spezialwerkzeug für chirurgische Zwecke. Hierbei ist zur Absaugung von Knochenspänen ein zentral im Werkzeug verlaufender Kanal vorgesehen.

Ein weiteres Fräswerkzeug, welches die Merkmale des Oberbegriffs des Anspruchs 1 aufweist, ist aus der US-A-2,437,668 bekannt. Dieses Werkzeug ist zur Holzbearbeitung vorgesehen und weist eine Vielzahl einzelner Zähne auf einem hohlen, rotierbaren Schaft auf, welcher zugleich der Spanabfuhr dient.

Ein Fräswerkzeug mit einer Mehrzahl strinseitig angeordneter Schneideinsätze und einem innenliegenden, symmetrisch zur Werkzeuglängsachse angeordnetem Spahnabfuhrkanal ist beispielsweise aus der JP 2002-166320 A bekannt. Die von den Schneideinsätzen erzeugten Späne werden hierbei mittels eines Luftstroms in den Spanabfuhrkanal gesaugt.

Ein Fräswerkzeug zur Leichtmetallbearbeitung, jedoch ohne zentralen Spahnabfuhrkanal, ist beispielsweise aus dem Katalog "Rotating tools catalogue", Februar 2001, Sandvik Coromant UK, Halesowen, England bekannt. Die Schneidengeometrie dieses Werkzeugs ist speziell den Erfordernissen der Bearbeitung von Aluminiumlegierungen angepasst.

Werkstücke aus Leichtmetall, beispielsweise Magnesiumlegierungen, werden häufig spanabhebend bearbeitet. Hierbei ist jedoch die Entstehung von Magnesiumstaub-LuftGemischen als problematisch anzusehen. Dieses Problem tritt insbesondere bei der trockenen Zerspanung von Leichtmetalllegierungen auf. Aus diesem Grund ist beispielsweise in der DE 44 39 114 A1 ein sehr aufwändiges Verfahren und eine Vorrichtung zur trockenen, spanabhebenden Bearbeitung, d.h. Zerspanung ohne Kühlmittelzufuhr, eines Werkstücks aus Leichtmetall vorgeschlagen, wobei das Zerspanungswerkzeug in einer geschlossenen Bearbeitungskammer angeordnet ist, in der ein Druckgefälle derart eingestellt ist, dass die Bearbeitungsspäne während des Zerspanungprozesses aus der Bearbeitungskammer herausgeführt werden. Diese Spanabfuhrvorrichtung beansprucht einen sehr großen Bauraum. Der hohe apparative Aufwand ist begründet durch das Explosionsrisiko, das durch die Entstehung trockener Magnesiumspäne und -stäube besonders ausgeprägt ist.

Ein Explosionsrisiko bei der spanabhebenden Leichtmetallbearbeitung lässt sich jedoch auch durch die Verwendung von Kühlschmiermitteln nicht ausschalten. Die Verwendung wässriger Emulsionen als Kühlschmiermittel scheidet aus, da Magnesium mit Wasser beim Bearbeitungsvorgang chemisch reagieren würde. Es muss daher auf Kühlschmiermittel auf Ölbasis ausgewichen werden. Diese haben jedoch den Nachteil, dass entstehende Ölnebel - allein oder zusammen mit Leichtmetallstaub - explosionsfähig sein können. Ein weiteres Problem stellt die Gesundheitsgefährdung durch die bei der Bearbeitung entstehenden Aerosole dar. Zudem ist das Kühlschmiermittel nach der Verwendung aufwändig aufzubereiten oder zu entsorgen. Ein weiteres Problem stellen beispielsweise auf der oder in der Umgebung der Bearbeitungsmaschine abgelagerte Leichtmetallstäube dar, die ein Explosionsrisiko nicht nur unmittelbar beim Bearbeitungsvorgang sondern auch durch eine Aufwirbelung von Staub zu einem späteren Zeitpunkt mit sich bringen. Somit sind die spezifischen mit der Zerspanung von Leichmetallen, insbesondere Magnesium und Magnesiumlegierungen, verbundenen Probleme auch durch die Verwendung von Kühlschmiermitteln nicht behebbar.

Der Erfindung liegt die Aufgabe zugrunde, eine Vorrichtung anzugeben, die eine besonders rationelle und sicherheitstechnisch unkritische Zerspanung von Leichtmetallen, insbesondere Magnesium und Magnesiumlegierungen, ermöglicht.

Diese Aufgabe wird erfindungsgemäß gelöst durch ein Fräswerkzeug mit den Merkmalen des Anspruches 1. Hierbei weist das Fräswerkzeug einen hülsenförmigen Schaft mit einem innen liegenden Spanabfuhrkanal und einer Absaugöffnung auf. Koaxial zur Werkzeuglängsachse und zum Schaft ist auf diesem ein Fräskopf gehalten, welcher mindestens eine Stirnschneide und mindestens eine Umfangsschneide als Schneiden aufweist. Die Schneidengeometrie mindestens einer der Schneiden, vorzugsweise sowohl der Umfangsschneide als auch der Stirnschneide, ist zumindest am Umfang des Fräskopfes positiv, d.h. die Stirnschneide und/oder die Umfangsschneide bildet einen positiven Spanwinkel, bevorzugt einen Spanwinkel von mindestens 10°. Der Spanwinkel der Stirnsschneide ist nicht notwendigerweise über die gesamte Länge der Stirnschneide konstant. Sofern die Umfangsschneide an die Stirnschneide anschließt, ist durch den Spanwinkel der Stirnschneide am Umfang des Fräskopfes zugleich der auch als Seitenspanwinkel bezeichnete Drallwinkel des Fräskopfes gegeben. Die positive Schneidengeometrie gewährleistet in jedem Fall eine Bearbeitung, bei stark positiven Spanwinkeln in Form eines Schälschnitts, mit geringen Zerspanungskräften, woduch das Werkzeug besonders für die Leichmetallzerspanung geeignet ist.

Die Abfuhr der bei der Bearbeitung eines Werkstücks entstehenden Späne erfolgt überwiegend, vorzugsweise ausschließlich, durch den im Schaft, insbesondere symmetrisch zur Werkzeuglängsachse, angeordneten Spanabfuhrkanal. Die Absaugöffnung des Spanabfuhrkanals ist vorzugsweise stirnseitig des Schaftes, dem Fräskopf gegenüberliegend, angeordnet. Aufgrund der Absaugung der Späne durch den Werkzeugschaft ist keine Bearbeitungskammer zur Spanabsaugung erforderlich.

Das Fräswerkzeug eignet sich insbesondere zur Trockenzerspanung von Leichtmetallen, wie Magnesium und Magnesiumlegierungen. Aufgrund des Fräskopfes mit mindestens einer Stirnschneide und mindestens einer Umfangsschneide ist das Fräswerkzeug sehr flexibel, beispielsweise zum Zirkularfräsen, einsetzbar. Zwar ist ein Werkzeug mit innerer Spanabfuhr beispielsweise aus der DE 2 316 762 A bekannt, jedoch handelt es sich hierbei nicht um ein Fräs- sondern um ein Bohrwerkzeug. Dieses Bohrwerkzeug ist hauptsächlich zur Herstellung von Tiefbohrungen vorgesehen. Eine Fräsbearbeitung ist mit dem Bohrwerkzeug nicht möglich. Dies ist insbesondere daran ersichtlich, dass das Bohrwerkzeug seitlich angeordnete Stützleisten aufweist, welche das Bohrwerkzeug in der Bohrung führen. Im Gegensatz hierzu weist das erfindungsgemäße Fräswerkzeug einen Fräskopf auf, welcher sowohl einen Vorschub in Axialrichtung, d.h. in Richtung der Werkzeuglängsachse, als auch einen Vorschub senkrecht zur Werkzeuglängsachse ermöglicht.

Die sofortige Absaugung der Späne durch den Werkzeugschaft verhindert, dass sich Späne auf der Bearbeitungsmaschine absetzen. Eine thermisch bedingte, durch heiße Späne verursachte Deformation des Werkstücks und/oder der Bearbeitungsmaschine ist damit ausgeschlossen. Die Späne können zumindest nahezu vollständig aufgefangen und einer weiteren Verwertung zugeführt werden. Der Verzicht auf eine äußere Absaugung der bei der Bearbeitung entstehenden Späne ermöglicht einen schnellen und einfachen Wechsel des Werkzeugs sowie des Werkstücks in der Bearbeitungsmaschine.

Der Fräskopf ist vorzugsweise einteilig aus einem Schneidwerkstoff wie Hartmetall hergestellt. Der Fräskopf ist hierdurch besonders stabil und auch für kleinere Werkzeugdurchmesser, beispielsweise unter 15 mm, geeignet. Der Fräskopf weist keine gesonderten, beispielsweise eingelöteten oder anschraubbaren Schneideinsätze auf. Die vollständig einteilige Ausbildung des Fräskopfes aus einem Schneidwerkstoff umfasst auch Ausführungsformen, bei denen einzelne Volumen- oder Oberflächenbereiche des Fräskopfes, beispielsweise in Form einer Beschichtung, eine von anderen Teilen des Fräskopfes abweichende Zusammensetzung oder Beschaffenheit aufweisen.

Der Durchmesser des Fräskopfes übersteigt vorzugsweise den Durchmesser des Schaftes zumindest in dem Bereich des Schaftes, der an den Fräskopf anschließt. Hierdurch ist sichergestellt, dass sowohl bei einer Bohr- als auch bei einer Fräs-, insbesondere Zirkularfräsbearbeitung der Schaft des Fräswerkzeuges nicht mit dem zu bearbeitenden Werkstück in Kontakt kommt.

Zur Abfuhr der Späne durch den Spanabfuhrkanal weist der Fräskopf eine einteilige oder mehrteilige Öffnungsfläche auf. Um eine zuverlässige Spanableitung zu gewährleisten und das Risiko eines Spanstaus auszuschließen, beträgt die Öffnungsfläche des Fräskopfes vorzugsweise mindestens 35%, insbesondere mindestens 50% der Querschnittsfläche des Schaftes. Die Ausbildung des Fräskopfes mit entsprechend geringen Materialstärken ist problemlos realisierbar, soweit das Fräswerkzeug ausschließlich zur Leichtmetallzerspanung bestimmt ist.

Eine zuverlässige Spanableitung in den Werkzeugschaft ist bevorzugt dadurch erleichtert, dass die Dicke des Fräskopfes maximal 50% des Durchmessers des Fräskopfes trägt. Hierdurch werden die Späne auf sehr kurzem Weg vom Werkstück in den Spanabfuhrkanal gefördert. Die Gefahr eines Staus von Spänen im Fräskopf ist damit äußerst gering.

Nach einer bevorzugten Ausgestaltung ist der Fräskopf mindestens dreiflügelig, mit mindestens drei Stirnschneiden und mindestens drei Umfangsschneiden ausgebildet. Hierdurch sind die Kräfte bei der Zerspanung im Gegensatz beispielsweise zu einem Einlippenbohrer zumindest annähernd symmetrisch verteilt. Die drei- oder mehrflügelige, beispielsweise fünfflügelige, Ausbildung des Fräskopfes hat zudem den Vorteil, dass, beispielsweise im Vergleich zu einer Ausführungsform mit lediglich zwei Stirnschneiden, relativ kurze Späne entstehen, welche leicht durch den innenliegenden Spanabfuhrkanal absaugbar sind. Je kleiner ein Span ist, desto größer ist dessen spezifische Oberfläche. Ein kleiner Span wird daher besonders gut durch einen Luftstrom im Spanabfuhrkanal abtransportiert. Bei der Herstellung einer Bohrung durch Zirkularfräsen treten, unabhängig von der Form des Fräskopfes, im Vergleich zum Bohren kürzere Späne auf. Das Fräswerkzeug ist daher zum Zirkularfräsen besonders geeignet.

Nach einer weiteren bevorzugten Ausgestaltung ist der Fräskopf nicht vollständig rotationssymmetrisch. Vielmehr erstreckt sich die Stirnschneide bzw. eine der Stirnschneiden vom Umfang des Fräskopfes bis über die Werkzeuglängsachse hinaus, wobei die Stirnschneide nicht notwendigerweise die Werkzeuglängsachse schneidet. Hierdurch ist ausgeschlossen, dass bei der Bearbeitung ein Kern, vergleichbar einem Bohrkern, stehen bleibt. Über praktisch den gesamten Querschnitt des Fräswerkzeuges wird das Werkstück definiert zerspant, d.h. ein bloßes Verdrängen von Material beim Bearbeitungsvorgang tritt praktisch nicht auf. Mit dem Fräswerkzeug sind damit lange Standzeiten realisierbar.

Die Stirnschneide des Fräskopfes grenzt vorzugsweise an einem so genannten Schneideneck direkt an die Umfangsschneide. Das am Umfang des Fräskopfes angeordnete Schneideneck ermöglicht die Herstellung exakter Konturen am Werkstück. Das Schneideneck ist dabei bevorzugt das, bezogen auf die Richtung der Werkzeuglängsachse, am weitesten axial vom Schaft beabstandete Teil des Fräskopfes, d.h. das Schneideneck ist innerhalb des Fräswerkzeuges am weitesten vom angeordnet. Wird mit dem Fräswerkzeug, beispielsweise durch Zirkularfräsen, eine Vertiefung in einem Werkstück hergestellt, so kann diese Vertiefung, da das Schneideneck am Fräskopf am weitesten vorn angeordnet ist, vollständig eben erzeugt werden. Eine Voraussetzung hierfür ist, dass eine ausreichende seitliche, d.h. radiale, Bewegungsfreiheit beim Fräsen existiert. Beim Aufsetzen des Werkzeugs auf das Werkstück hebt zunächst lediglich das Schneideneck vom Werkstück einen Span ab. Die Zerspanungskräfte sind daher bei Beginn des Zerspanungsvorgangs sehr gering.

Eine besonders günstige Zerspanungsgeometrie, insbesondere bei der Leichtmetallzerspanung, ist des Weiteren vorzugsweise dadurch erreicht, dass das Schneideneck spitzwinklig ausgebildet ist. Um eine besonders ausgeprägte spitzwinklige Form des Schneidenecks zu erreichen, bilden an dieser Stelle sowohl die Stirnschneide als auch die Umfangs- oder Radialschneide bevorzugt jeweils einen positiven Spanwinkel, nämlich einen axialen Spanwinkel beziehungsweise einen radialen Spanwinkel. Hierbei ist durch den Winkel, den die an die Spanfläche der Stirnschneide grenzende Umfangsschneide am Schneideneck mit der Werkzeuglängsachse einschließt, an dieser Stelle der axiale Spanwinkel, d.h. der Spanwinkel der Stirnschneide gegeben. Dieser Winkel, welcher einen Drall- oder Spiralwinkel des Fräskopfes bildet, beträgt bevorzugt mindestens 10°, insbesondere mindestens 30°. Zugleich ist an der Umfangsschneide ein am Schneideneck durch die Lage der Stirnschneide gegebener radialer Spanwinkel gebildet, welcher bevorzugt ebenfalls mindestens 10°, insbesondere mindestens 15°, beträgt. Durch die hoch positive Auslegung sowohl der axialen als auch der radialen Schneide, d.h. der Stirn- sowie der Umfangsschneide, sind sowohl axiale als auch radiale Vorschubbewegungen leicht ausführbar.

Der Fräskopf ist mit dem Schaft vorzugsweise dauerhaft, beispielsweise durch Lötung, verbunden. Eine besonders stabile Verbindung ist hierbei insbesondere dadurch erreichbar, dass der Schaft den Fräskopf teilweise umschließt. Hierzu weist der Fräskopf, beispielsweise etwa in der Mitte dessen Höhe, eine so genannte Umfangsstufe auf, an welche sich in Richtung zum Schaft hin ein verjüngter Bereich des Fräskopfes anschließt. Zur spanabhebenden Bearbeitung steht der über den Schaft hinausragende Teil des Fräskopfes zur Verfügung. Um diesen Teil weitestmöglich für die Zerspanung zu nutzen, dehnt sich die Umfangsschneide bevorzugt vom Schneideneck bis zur Umfangsstufe aus.

Eine erhöhte Stabilität des Schaftes ist erreichbar, indem dieser doppelwandig mit einem Innenschaft und einem Außenschaft ausgebildet ist. Durch diese doppelwandige Ausbildung ist insbesondere auch der Zwischenraum zwischen dem Innenschaft und dem Außenschaft nutzbar. Vorzugsweise ist der Zwischenraum des Schaftes für die Zuführung eines Fluides, insbesondere Druckgases, beispielsweise Druckluft, vorgesehen, während der Innenschaft die Wandung des Spanabfuhrkanals bildet. Durch die Zuführung von Druckluft durch eine hierfür vorgesehene Fluidzufuhröffnung, welche vorzugsweise seitlich am Außenschaft angeordnet ist, wird die Spanableitung unterstützt. Zusätzlich oder alternativ zur Druckluft ist durch die Fluidzufuhröffnung beispielsweise auch ein Kühlschmiermittel zuführbar. Der zwischen dem Innenschaft und dem Außenschaft gebildete Fluidkanal weist vorzugsweise eine Schraubenform auf. Dies hat den Vorteil, dass das am Schaftende auf den Fräskopf und die Bearbeitungsstelle geleitete Fluid, z.B. Kühlschmiermittel, zusätzlich zur axialen Strömungsrichtung eine tangentiale Strömungskomponente aufweist und damit entstehende Späne sofort zum Spanabfuhrkanal hin abführt. Die Eindüsung von Kühlschmiermittel am Fräskopf kann dabei in der Art einer Wasserstrahlpumpe gestaltet sein. Der schraubenförmige Fluidkanal ermöglicht zusätzlich, zwischen dem Innenschaft und den Außenschaft entsprechend schraubenförmige Abstützelemente anzuordnen und damit die Stabilität des Schaftes weiter zu erhöhen.

Der Spanabfuhrkanal sollte in Relation zum Durchmesser des Fräswerkzeuges großzügig dimensioniert sein, um eine störungsfreie Spanableitung zu gewährleisten. Bevorzugt beträgt der Durchmesser des Spanabfuhrkanals mindestens 75% des Schaftdurchmessers. Im Fall eines doppelwandigen Schaftes beträgt der innere Innenschaftdurchmesser, welcher den Durchmesser des Spanabfuhrkanals definiert, mindestens 75% des mit dem Schaftdurchmesser identischen äußeren Durchmessers des Außenschaftes. Die Wandstärken des Außenschaftes sowie des Innenschaftes betragen dabei vorzugsweise jeweils maximal 10% des Schaftdurchmessers. Da die Aufnahme zumindest des Hauptanteils der Zerspanungs- und Einspannkräfte durch den Außenschaft vorgesehen ist, übersteigt die Wandstärke des Außenschaftes vorzugsweise die Wandstärke des Innenschaftes.

Der Vorteil der Erfindung liegt insbesondere darin, dass durch einen innenliegenden Spanabfuhrkanal eines Fräswerkzeuges, welches einen Fräskopf mit sowohl mindestens einer Stirnschneide als auch mindestens einer Umfangsschneide aufweist, eine sehr rationelle Bearbeitung mit axialem und/oder radialem Vorschub, insbesondere Zirkularfräsbearbeitung, eines Werkstücks, insbesondere aus einem Leichtmetall, beispielsweise Magnesium, ermöglicht ist.

Nachfolgend werden mehrere Ausführungsbeispiele der Erfindung näher erläutert. Darin zeigen:
- Fig. 1A,B: in perspektivischer Darstellung ein Fräswerkzeug mit innen liegendem Spanabfuhrkanal,
- Fig. 2A bis 2C: in verschiedenen Ansichten den Fräskopf des Fräswerkzeuges nach Fig. 1A,B,
- Fig. 3A bis 3E: einen Schaft eines Fräswerkzeuges mit innen liegendem Spanabfuhrkanal,
- Fig. 4A bis 4E: einen fünfflügeligen Kopf für ein Fräswerkzeug mit innen liegendem Spanabfuhrkanal,
- Fig. 5A bis 5E: einen dreiflügeligen Kopf für ein Fräswerkzeug mit innen liegendem Spanabfuhrkanal,
- Fig. 6A bis 6H: eine alternative Ausführungsform eines dreiflügeligen Fräskopfes,
- Fig. 7: ein hydraulisches Dehnspannfutter mit einem eingespannten Fräswerkzeug, und
- Fig. 8A bis 8D: ein Fräswerkzeug sowie eine Einspann- und Versorgungsvorrichtung.

Einander entsprechende Teile sind in allen Figuren mit den gleichen Bezugszeichen versehen.

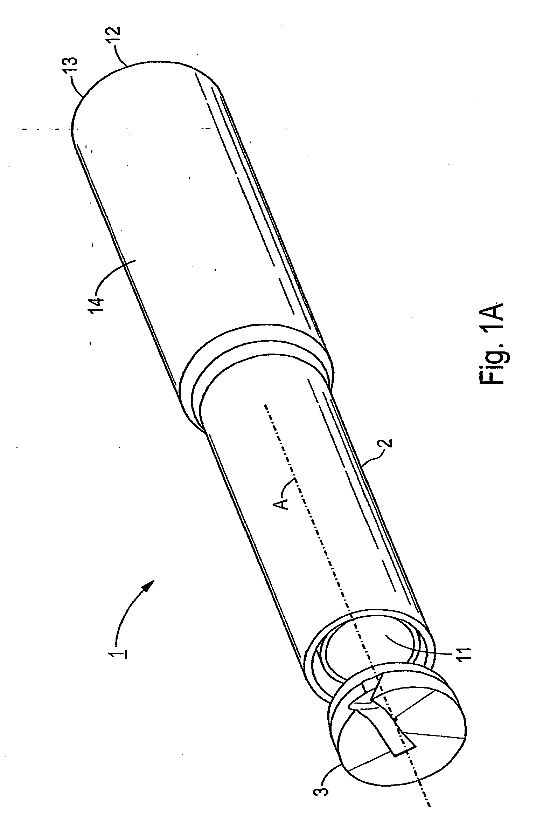

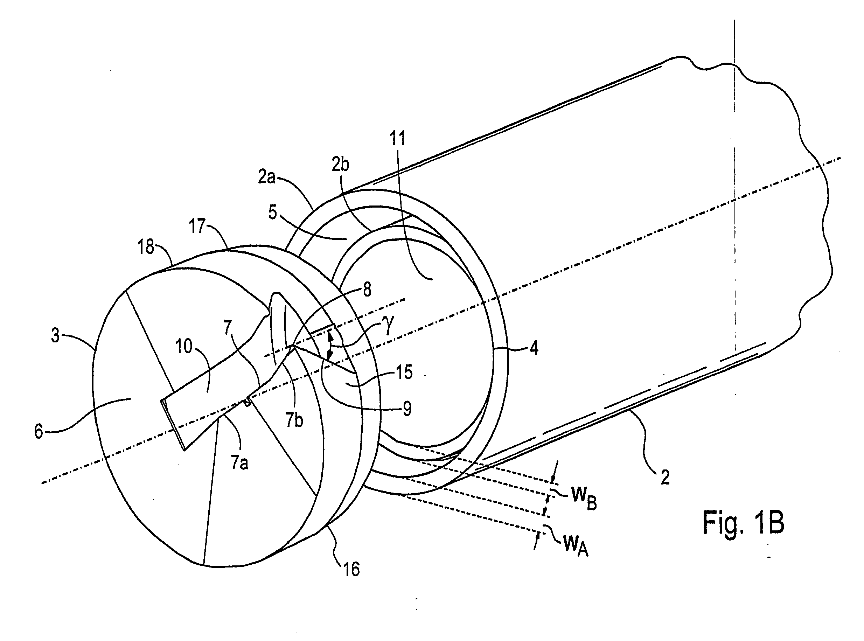

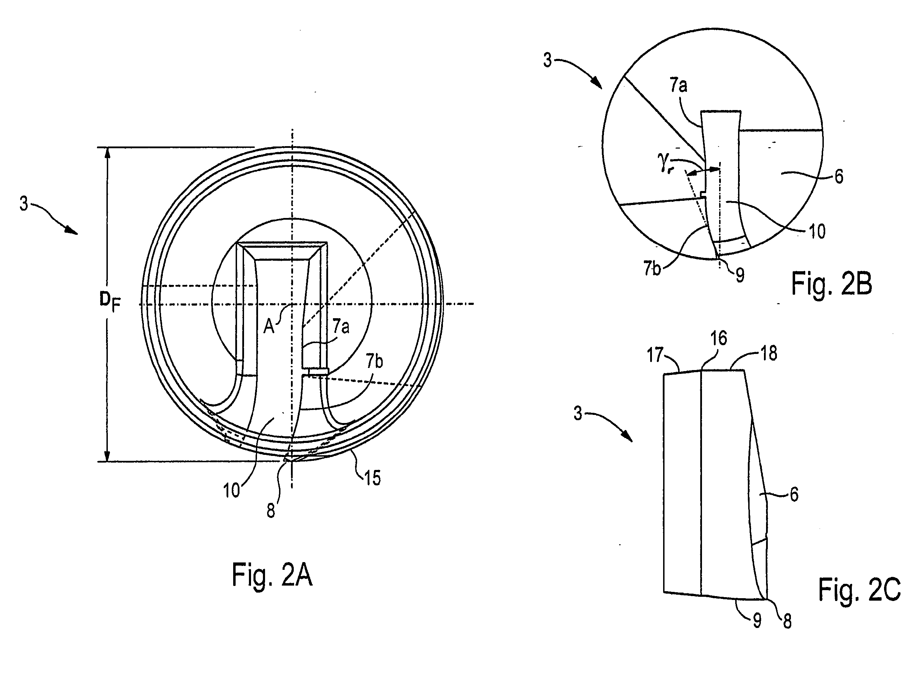

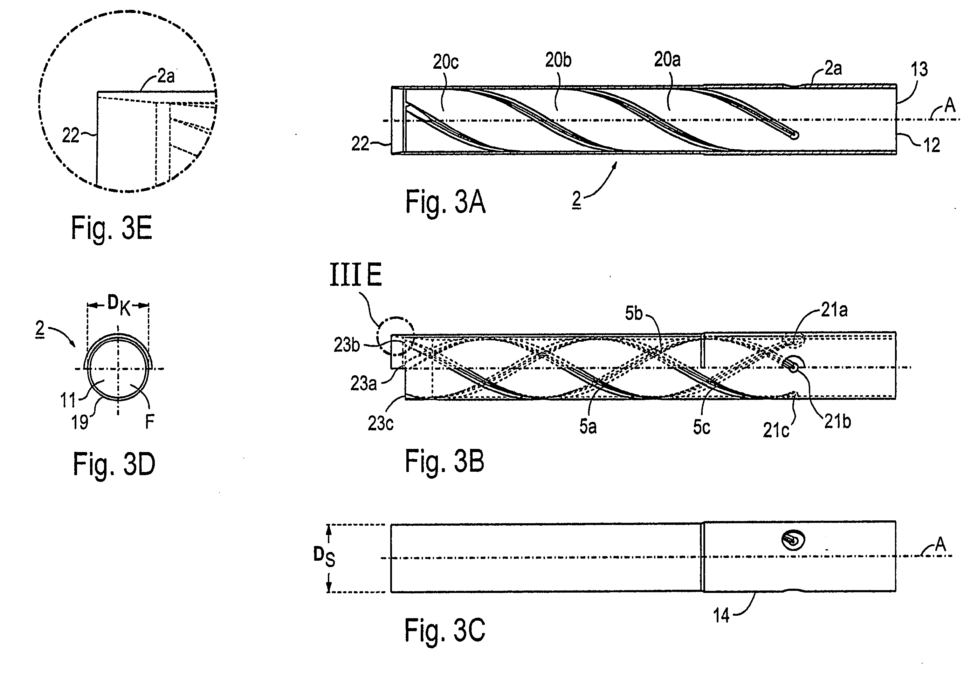

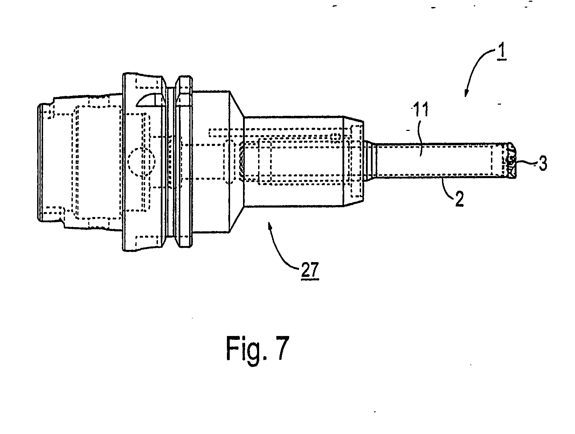

Die Fig. 1A,1B zeigen in perspektivischer Gesamtansicht bzw. ausschnittsweise ein Fräswerkzeug 1 mit einem Schaft 2 und einem im Wesentlichen scheibenförmigen Fräskopf 3. In den Fig. 2A bis 2C ist in verschiedenen Ansichten der Fräskopf 3 allein dargestellt. Im einzelnen zeigt Fig. 2A den Fräskopf 3 von unten, d.h. mit Blickrichtung aus dem Schaft 2 heraus, Fig. 2B den Fräskopf 3 von oben, und Fig. 3C eine Seitenansicht des Fräskopfes 3. Der Schaft 2 des Fräswerkzeuges 1 ist doppelwandig mit einem Außenschaft 2a und einem Innenschaft 2b ausgebildet. Der Fräskopf 3 ist zur Verdeutlichung dieser Ausbildung in den Fig. 1A, 1B vom Schaft 2 abgesetzt dargestellt. Der Innenschaft 2b ist derart exzentrisch zum Außenschaft 2a angeordnet, dass der Innenschaft 2a an dessen Umfang an einem Kontaktbereich 4, welcher sich parallel zur Achse A des Fräswerkzeuges 1 längs des Schaftes 2 erstreckt, am Außenschaft 4 anliegt. Der Innenschaft 2b ist mit dem Außenschaft 2a am Kontaktbereich 4, beispielsweise durch Lötung, dauerhaft verbunden. Gegenüber dem Kontaktbereich 4 ist im Schaft 2 zwischen dem Innenschaft 2b und dem Außenschaft 2a ein im Querschnitt etwa sichelförmiger Fluidkanal 5 gebildet. Durch den Fluidkanal 5 ist ein Fluid, beispielsweise Druckluft und/oder Kühlschmiermittel, dem Fräskopf 3 zuführbar. Der Fräskopf 3 weist an dessen Stirnseite 6 eine Stirnschneide 7 sowie an diese an einem Schneideneck 8 angrenzend eine Umfangsschneide 9 auf. Ein an den Schneiden 7,9 gebildeter Span, insbesondere Leichtmetallspan, tritt durch einen Spalt 10 in einen vom Innenschaft 2b eingeschlossenen Spanabfuhrkanal 11 ein und ist durch eine Absaugöffnung 12 hindurch, welche am Schaftende 13 in einem verdickten Bereich 14 des Schaftes 2 angeordnet ist, absaugbar. Der verdickte, mechanisch besonders stabile Bereich 14 dient der Aufnahme der auf das Fräswerkzeug 1 im Dehnspannfutter 27 (Fig. 7) oder im Gehäuse mit vertikaler Absaugung einwirkenden Spannkräfte.

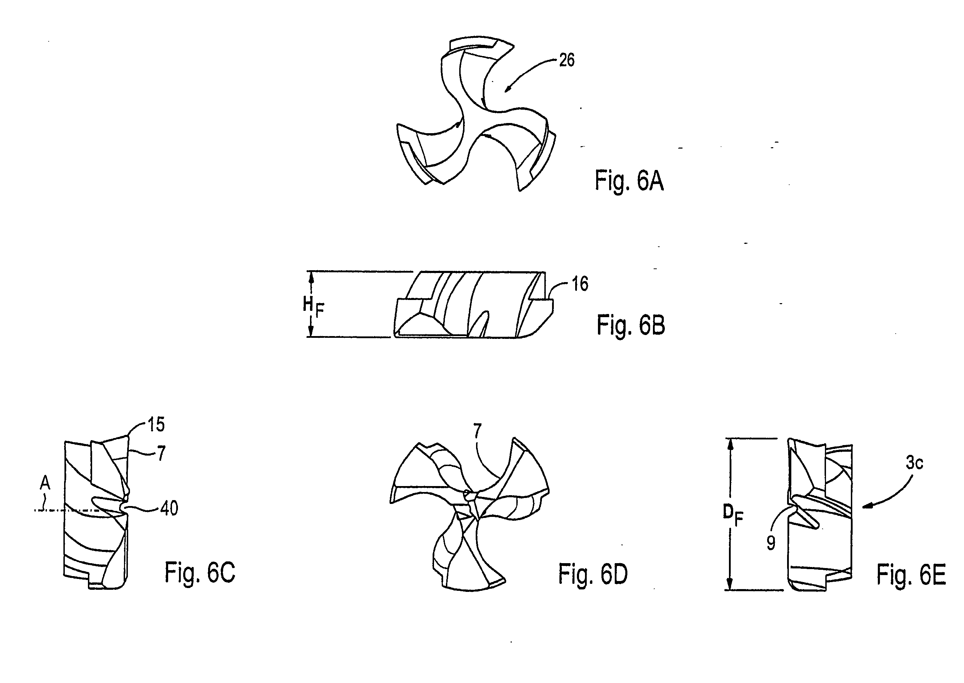

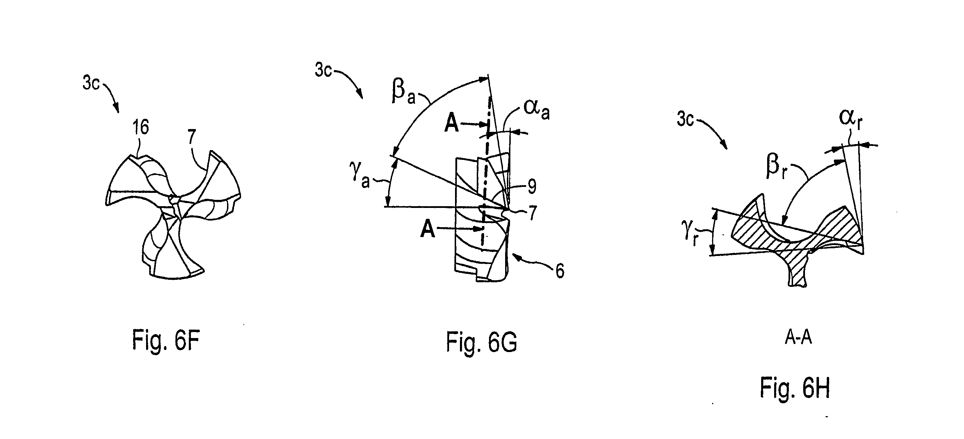

Die Stirnschneide 7 weist eine Radialschneide 7a sowie eine an diese angrenzende, teilweise gekrümmte, im Vergleich zu dieser relativ kurze, an das Schneideneck 8 grenzende Schrägschneide 7b auf. Insgesamt erstreckt sich die Stirnschneide 7 von einem Rand 15 des Fräskopfes 3 im Wesentlichen radial bis über die Werkzeugachse A hinaus. Die Umfangsschneide 9 schließt am Schneideneck 8 mit einer zur Werkzeuglängsachse A parallelen Geraden einen in diesem Ausführungsbeispiel konstanten Drallwinkel γ von etwa 45° ein, welcher einem axialen Spanwinkel γₐ der Stirnschneide 7 entspricht (s. Fig. 6G). Zugleich bildet die Umfangsschneide 9, wie insbesondere aus Fig. 2A und Fig. 2B ersichtlich ist, einen radialen Spanwinkel γᵣ von ca. 15° bis 20°, welcher an der Stirnseite 6 des Fräskopfes 3 durch die Lage der Stirnschneide 7 gegeben ist und nicht notwendigerweise über die gesamte Länge der Umfangsschneide 9 konstant ist. Am Schneideneck 8 ergibt sich somit durch die Schrägstellung der Schneiden bzw. Schneidenabschnitte 9,7b eine hoch positive Schneidengeometrie. Aufgrund dieser Schneidengeometrie ist das Fräswerkzeug 1 besonders zur Leichtmetallzerspanung, insbesondere zur Hochgeschwindigkeitsbearbeitung, geeignet.

Der Fräskopf 3 weist, wie insbesondere aus der Fig. 2C ersichtlich ist, eine Umfangsstufe 16 auf, durch welche ein verjüngter Bereich 17 von einem vorderen, die Schneiden 7,9 tragenden Bereich 18 abgegrenzt ist. Am verjüngten Bereich 17 ist der Fräskopf 3 mit dem Außenschaft 2a durch Lötung, Schweißung oder Klebung verbindbar. Der Durchmesser D_{S}, den der Schaft 2 in dessen an den Fräskopf 3 grenzenden Bereich aufweist, ist etwas geringer als der Durchmesser D_{F} des Fräskopfes 3, welcher durch den zweifachen maximalen Abstand der Umfangsschneide 9 von der Werkzeuglängsachse gegeben ist.

Die Fig. 3A bis 3E zeigen in verschiedenen Darstellungen einen Schaft 2, welcher als Teil eines Fräswerkzeuges 1 beispielsweise mit einem Fräskopf 3 nach den Fig. 2A bis 2C einsetzbar ist. Der Schaft 2 ist doppelwandig ausgebildet, wobei die Wandstärke W_{A} des Außenschaftes 2a größer ist als die Wandstärke W_{B} des Innenschaftes 2b (s. Fig. 1A,B). Der Innenschaft 2b ist in diesem Ausführungsbeispiel (Fig. 3A-E) symmetrisch im Außenschaft 2a angeordnet, welcher in dessen zur Aufnahme in einer Bearbeitungsmaschine vorgesehenem hinterem Bereich, welcher den verdickten Bereich 14 umfasst, mehrfach profiliert sein kann. Innerhalb des zwischen dem Innenschaft 2b und dem Außenschaft 2a gebildeten Ringraumes 19 befinden sich drei separate schraubenförmige Fluidkanäle 5a,b,c. Zwischen den einzelnen Fluidkanälen 5a,b,c befinden sich im Ringraum 19 jeweils ebenso schraubenförmige Stege 20a,b,c. Jeder Fluidkanal 5a,b,c weist jeweils am Schaft 2 eine Fluideintrittsöffnung 21a,b,c sowie am zur Aufnahme des Fräskopfes 3 vorgesehenen vorderen Ende 22 des Schaftes 2 eine Fluidaustrittsöffnung 23a,b,c auf. Die Fluidkanäle 5a,b,c eignen sich insbesondere dazu, in Form einer Minimalmengenschmierung Kühlschmiermittel dem Fräskopf 3 zuzuführen. Für die Zuführung des unter Druck stehenden Fluides ist ein geringer Querschnitt der Fluidkanäle 5a,b,c im Vergleich zum gesamten Querschnitt des Schaftes 2 ausreichend. Der größte Teil der Querschnittsfläche F des Schaftes 2 steht für die Spanabfuhr zur Verfügung. Unter der Querschnittsfläche F wird hierbei diejenige Querschnittsfläche des Schaftes 2 verstanden, die dieser an dessen vorderem Ende 22 unmittelbar anschließend an den Fräskopf 3 aufweist. Der Durchmesser D_{K} des Spanabfuhrkanals 11, welcher durch den Innendurchmesser des Innenschaftes 2b gegeben ist, beträgt mehr als 90% des Schaftdurchmessers D_{S}, welcher durch den Außendurchmesser des Außenschaftes 2a im Bereich dessen vorderen Endes 22 gegeben ist. Auf diese Weise ist ein hoher Massenstrom an Spänen und Gas, insbesondere Luft, gegebenenfalls vermischt mit Kühlschmiermittel, durch den Spanabfuhrkanal 11 ermöglicht.

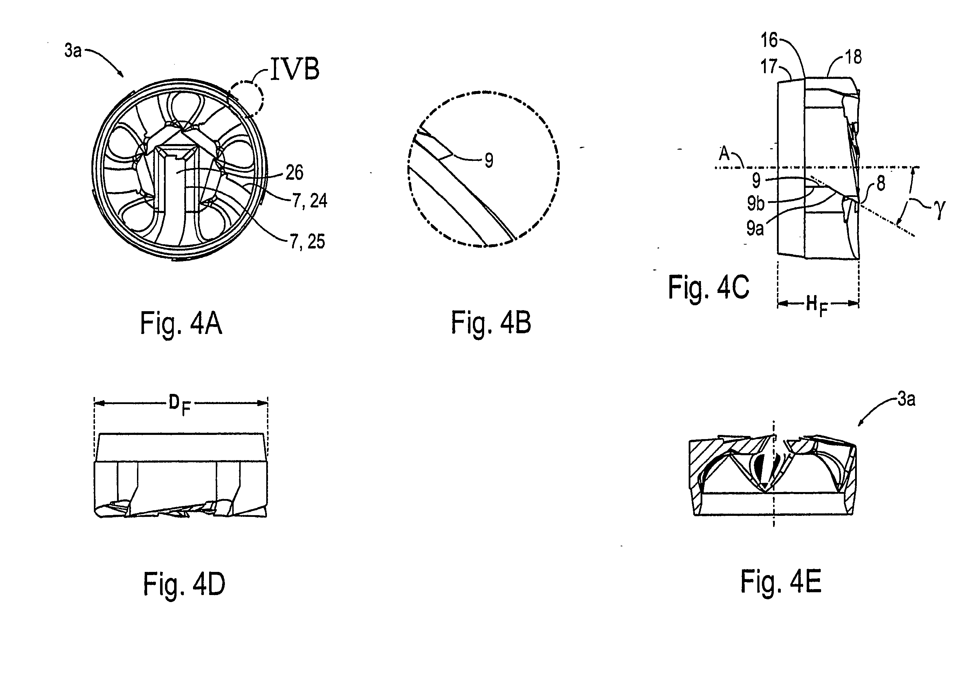

Die Fig. 4A-E, 5A-E, 6A-G zeigen verschiedene Ausführungsformen von Fräsköpfen 3a,3b,3c, welche einstückig oder einteilig aus einem Schneidwerkstoff, insbesondere Hartmetall, Cermet oder Keramik, insbesondere PKD- und CBN- bestückt, hergestellt und mit einem Schaft 2 nach Fig. 3A-E zu einem Fräswerkzeug 1 verbindbar, insbesondere verlötbar, sind. Die Fräsköpfe 3a,3b,3c sind für verschiedene Arten von Fräsbearbeitungen, insbesondere zum Zirkularfräsen, geeignet. Beim Zirkularfräsen rotiert das Fräswerkzeug 1 um die Werkzeuglängsachse A und gleichzeitig die Achse A um eine zu dieser parallelen weiteren Achse. Auf diese Weise ist eine Bohrung herstellbar, deren Durchmesser größer als der Durchmesser D_{F} des Fräskopfes 3,3a,3b,3c ist. Es ist somit eine Vielzahl von Bohrungen mit unterschiedlichen Durchmessern mit einer vergleichsweise geringen Anzahl an Fräswerkzeugen 1 herstellbar. Die Zirkularfräsbearbeitung hat im Vergleich zur Herstellung einer Bohrung mit einem Bohrwerkzeug des Weiteren den Vorteil, dass bei der Zerspanung lediglich kurze Späne entstehen, welche leicht von der Bearbeitungsstelle abführbar sind.

Der Fräskopf 3a nach Fig. 4A-E ist fünfflügelig oder fünfschneidig mit fünf Stirnschneiden 7 und fünf Umfangsschneiden 9 ausgebildet. Vier der fünf Stirnschneiden 7 sind als so genannte Kurzschneiden 24 ausgebildet, während eine der Stirnschneiden 7 als so genannte Langschneide 25 ausgebildet ist, welche sich im Gegensatz zu den Kurzschneiden 24 vom Rand 15 des Fräskopfes 3a über die Werkzeuglängsachse oder kurz Achse A hinaus erstreckt. Die Umfangsschneiden 9 haben in dem dargestellten Ausführungsbeispiel eine geknickte Form mit einem an das Schneideneck 8 grenzenden vorderen Schneidenbereich 9a, welcher den Drallwinkel γ, welcher dem axialen Spanwinkel γₐ entspricht, von etwa 30° mit der Werkzeuglängsachse A einschließt, und mit einem hinteren Schneidenbereich 9b, welcher parallel zur Werkzeuglängsachse A verläuft. Durch den gegenüber der Werkzeuglängsachse A schräg gestellten vorderen Schneidenbereich 9a ist eine besonders positive Schneidengeometrie insbesondere am Schneideneck 8 erreicht. Hierdurch ist insbesondere bei der Leichtmetallbearbeitung eine Zerspanung mit einer hohen Oberflächenqualität am bearbeiteten Werkstück und mit geringen Schnittkräften ermöglicht. Der mit der Schrägstellung des vorderen Schneidenbereichs 9a der Umfangsschneide 9 erzielte Effekt ist mit dem mit der Schrägstellung der Schrägschneide 7b der Stirnschneide 7 erzielten Effekt vergleichbar, wobei beide Effekte in sich verstärkender Weise gleichzeitig an einem Fräskopf 3,3a realisierbar sind.

Der Fräskopf 3a weist in Draufsicht (Fig. 4A, Ansicht von unten) eine entsprechend der Anzahl der Stirnschneiden fünfteilige Öffnungsfläche 26 auf, durch welche gebildete Späne zum Spanabfuhrkanal 11 hin abtransportierbar sind. Die Größe der Öffnungsfläche 26 variiert längs der Achse A des Fräswerkzeuges 1, beträgt jedoch in jedem Fall mindestens 35% der Querschnittsfläche F des Schaftes 2. Die Fräskopfhöhe H_{F} beträgt weniger als 50% des Fräskopfdurchmessers D_{F}. Gebildete Späne werden damit auf sehr kurzem Weg in den Spanabfuhrkanal 11 eingeleitet. Der verjüngte Bereich 17 des Fräskopfes 3a ist leicht konisch ausgebildet, um ein leichtes Einsetzen des Fräskopfes 3a in den entsprechend geformten Schaft 2 (Fig. 3A-E) zu ermöglichen.

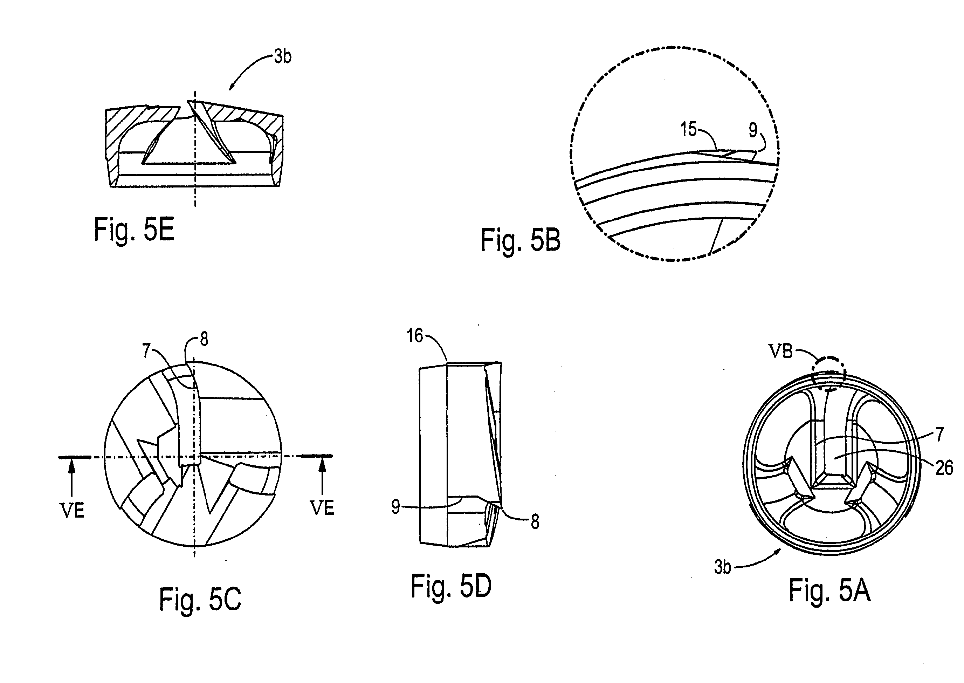

Der in den Fig. 5A-5E dargestellte Fräskopf 3b ist dreiflügelig ausgebildet und entspricht im Übrigen weitgehend dem Fräskopf 3a nach Fig. 4A-4E. Der in den Fig. 6A-6H dargestellte Fräskopf 3c ist eine weitere Ausführungsformen eines dreiflügeligen Fräskopfes mit einer besonders großen Öffnungsfläche 26. Der Fräskopf 3c weist im Bereich der Achse A an dessen Stirnseite 6 eine Vertiefung 40 auf. Die Umfangsstufe 16 ist beim Fräskopf 3c besonders deutlich ausgeprägt. Insbesondere aus der Seitenansicht nach Fig. 6C ist ferner ersichtlich, dass die Stirnschneiden 7 vom Rand 15 des Fräskopfes 3c zur Achse A hin etwas abfallen, d.h. die Stirnschneiden 7 am jeweiligen Schneideneck 8 maximal vom Schaft 2 axial beabstandet sind. Die an den Schneiden 7,9 gebildeten Winkel, nämlich der axiale Freiwinkel αₐ, der axiale Keilwinkel βₐ, und der axiale Spanwinkel γₐ an der Stirnschneide 7, sowie der radiale Freiwinkel αᵣ, der radiale Keilwinkel βᵣ, und der radiale Spanwinkel γᵣ an der Umfangsschneide 9 sind aus Fig. 6G und 6H ersichtlich. Hieraus geht weiterhin hervor, dass der axiale Spanwinkel γₐ größer ist als der radiale Spanwinkel γᵣ, wodurch eine besonders leichte Spanabfuhr in axialer Richtung ermöglicht ist.

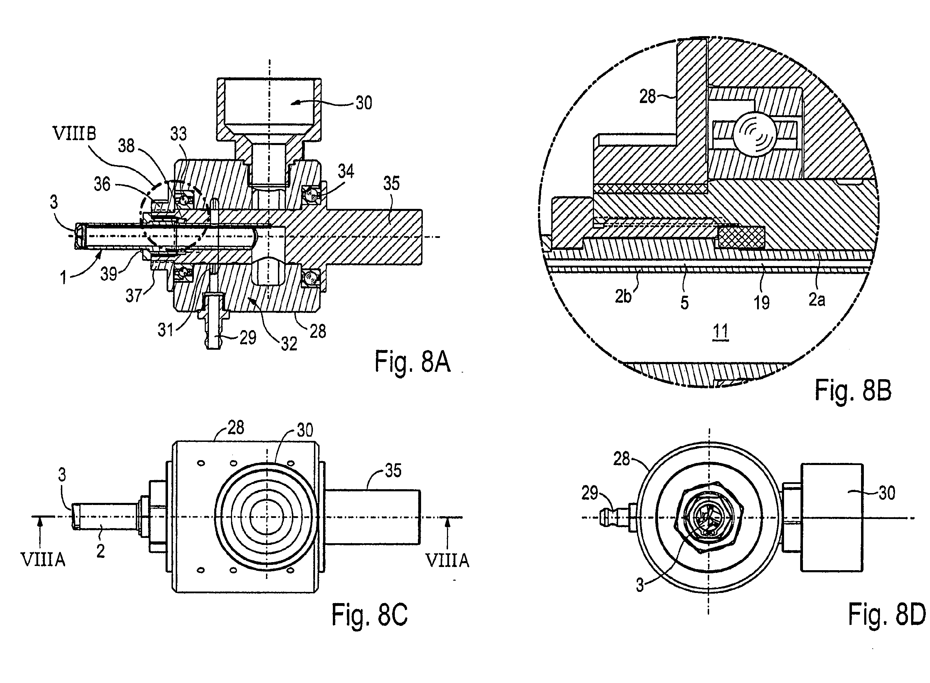

Die Fig. 7 sowie 8A-8D zeigen ein Fräswerkzeug 1, welches in einem Hydraulikdehnspannfutter 27 bzw. in einer Spann- und Versorgungsvorrichtung 28 eingespannt ist. In der Spann- und Versorgungsvorrichtung 28 ist das Fräswerkzeug 1 im dargestellten Ausführungsbeispiel ohne hydraulischen Spannmechanismus einspannbar, jedoch ist die Integration eines solchen hydraulischen Spannmechanismus' ebenso möglich. Die Spann- und Versorgungsvorrichtung 28 ermöglicht sowohl eine Fluidzufuhr zu den Fluidkanälen 5a,b,c als auch eine Span- und gegebenenfalls Fluidabsaugung aus der Absaugöffnung 12. Hierzu weist die Spann- und Versorgungsvorrichtung 28 einen Fluidzufuhrstutzen 29 sowie einen Absaugtrichter 30 auf, welche an nicht dargestellte Ver- bzw. Entsorgungsvorrichtungen anschließbar sind.

Durch den Fluidzufuhrstutzen 29 ist dem Fräswerkzeug 1 über einen Kühlmittelring 31 Druckluft und/oder Kühlschmiermittel zuführbar. Alternativ können auch gesonderte Fluidzufuhrstutzen 29 für die Druckluftzufuhr einerseits und die Kühlschmiermittelzufuhr andererseits vorgesehen sein. In jedem Fall entspricht der durch den bzw. die Fluidzufuhrstutzen 29 dem Fräswerkzeug 1 zugeführte Massenstrom - ohne Berücksichtigung der Masse der Späne - etwa dem über den Absaugtrichter 30, welcher mit einem Unterdruck beaufschlagbar ist, aus der Absaugöffnung 12 abgesaugten Massenstrom. Auf diese Weise ist sichergestellt, dass die Späne vollständig und unmittelbar nach deren Bildung durch den innenliegenden Spanabfuhrkanal 11 hindurch abtransportiert werden.

Die Spann- und Versorgungsvorrichtung 28 weist ein Lagergehäuse 32 auf, in welchem mit Hilfe eines vorderen Kugellagers 33 und eines hinteren Kugellagers 34 eine Grundaufnahme 35, welche den Schaft 2 konzentrisch hält, rotierbar gelagert ist. Die im Wesentlichen rotationssymmetrische Grundaufnahme 35 ist, um eine Zuführung von Druckluft und/oder Kühlschmiermittel sowie eine Spanabfuhr zum beziehungsweise vom Fräswerkzeug zu ermöglichen, mehrfach durchbrochen. Auf der dem Fräskopf 3 zugewandten, vorderen Seite des Lagergehäuses 32 sind zur Einspannung und Sicherung der Grundaufnahme 35 sowie des Schaftes 2 eine innere Haltemutter 36, eine äußere Haltemutter 37, zwei Mitnahmestifte 38 und ein Sicherungsring 39 vorgesehen.

### Bezugszeichenliste

- 1: Fräswerkzeug
- 2: Schaft
- 2a: Außenschaft
- 2b: Innenschaft
- 3a,b,c,d: Fräskopf
- 4: Kontaktbereich
- 5a,b,c: Fluidkanal
- 6: Stirnseite
- 7: Stirnschneide
- 7a: Radialschneide
- 7b: Schrägschneide
- 8: Schneideneck
- 9: Umfangsschneide
- 9a: vorderer Schneidenbereich
- 9b: hinterer Schneidenbereich
- 10: Spalt
- 11: Spanabfuhrkanal
- 12: Absaugöffnung
- 13: Schaftende
- 14: verdickter Bereich
- 15: Rand
- 16: Umfangsstufe
- 17: verjüngter Bereich
- 18: vorderer Bereich
- 19: Ringraum
- 20a,b,c: Steg
- 21a,b,c: Fluideintrittsöffnung
- 22: vorderes Ende
- 23a,b,c: Fluidaustrittsöffnung
- 24: Kurzschneide
- 25: Langschneide
- 26: Öffnungsfläche
- 27: Hydraulikdehnspannfutter
- 28: Spann- und Versorgungsvorrichtung
- 29: Fluidzufuhrstutzen
- 30: Absaugtrichter
- 31: Kühlmittelring
- 32: Lagergehäuse
- 33: Kugellager
- 34: Kugellager
- 35: Grundaufnahme
- 36: Haltemutter
- 37: Haltemutter
- 38: Mitnahmestift
- 39: Sicherungsring
- 40: Vertiefung

- γ: Drallwinkel
- αₐ: axialer Freiwinkel
- βₐ: axialer Keilwinkel
- γₐ: axialer Spanwinkel
- αᵣ: radialer Freiwinkel
- βᵣ: radialer Keilwinkel
- γᵣ: radialer Spanwinkel
- A: Werkzeuglängsachse
- D_{K}: Durchmesser Spanabfuhrkanal
- D_{S}: Durchmesser Schaft
- D_{F}: Durchmesser Fräskopf
- F: Querschnittsfläche
- H_{F}: Fräskopfhöhe
- W_{A}: Wandstärke
- W_{B}: Wandstärke

## Patentansprüche

1. Fräswerkzeug (1), welches um eine Werkzeuglängsachse (A) rotierbar ist, mit
• einem hülsenförmigen Schaft (2) mit einem innen liegenden, sich parallel zur Werkzeuglängsachse (A) erstreckenden Spanabfuhrkanal (11) und einer Absaugöffnung (12),
• einem koaxial zur Werkzeuglängsachse (A) und zum Schaft (2) auf diesem gehaltenen Fräskopf (3, 3a, 3b, 3c) mit einer Stirnschneide (7) und einer Umfangsschneide (9) als Schneiden (7, 9), wobei mindestens eine Schneide (7 ,9) am Umfang des Fräskopfs (3, 3a, 3b, 3c) einen positiven Spanwinkel (γₐ, γᵣ) bildet,
**dadurch gekennzeichnet,**
**dass** der Schaft (2) doppelwandig mit einem Innenschaft (2b) und einem Außenschaft (2a) ausgebildet ist.

2. Fräswerkzeug nach Anspruch 1,
**dadurch gekennzeichnet,**
**dass** der Spanwinkel (γₐ, γᵣ) am Umfang des Fräskopfs (3, 3a, 3b, 3c) mindestens 10° beträgt.

3. Fräswerkzeug nach Anspruch 2,
**dadurch gekennzeichnet,**
**dass** sowohl der Spanwinkel (γₐ) der Stirnschneide (7) als auch der Spanwinkel (γᵣ) Umfangsschneide (9) am Umfang des Fräskopfs (3, 3a, 3b, 3c) mindestens 10° beträgt.

4. Fräswerkzeug nach einem der Ansprüche 1 bis 3,
**dadurch gekennzeichnet,**
**dass** der Fräskopf (3, 3a, 3b, 3c) einteilig aus einem Schneidwerkstoff gebildet ist.

5. Fräswerkzeug nach einem der Ansprüche 1 bis 4,
**dadurch gekennzeichnet,**
**dass** der Durchmesser (D_{S}) des Schaftes (2) zumindest in einem an den Fräskopf (3, 3a, 3b, 3c) grenzenden Bereich geringer als der Durchmesser (D_{F}) des Fräskopfes (3, 3a, 3b, 3c) ist.

6. Fräswerkzeug nach einem der Ansprüche 1 bis 5,
**dadurch gekennzeichnet,**
**dass** der Fräskopf (3, 3a, 3b, 3c) eine Öffnungsfläche (26) zur Ableitung von Spänen in den Spanabfuhrkanal (11) aufweist, welche mindestens 35% der Querschnittsfläche (F) des Schaftes (2) beträgt.

7. Fräswerkzeug nach einem der Ansprüche 1 bis 6,
**dadurch gekennzeichnet,**
**dass** die Höhe (H_{F}) des Fräskopfes (3, 3a, 3b, 3c) maximal 50 % des Durchmessers (D_{F}) des Fräskopfes (3, 3a, 3b, 3c) beträgt.

8. Fräswerkzeug nach einem der Ansprüche 1 bis 7,
**dadurch gekennzeichnet,**
**dass** der Fräskopf (3, 3a, 3b, 3c) mindestens dreiflügelig ausgebildet ist.

9. Fräswerkzeug nach einem der Ansprüche 1 bis 8,
**dadurch gekennzeichnet,**
**dass** sich die Stirnschneide (7) von einem Rand (15) des Fräskopfes (3, 3a, 3b, 3c) bis über die Werkzeuglängsachse (A) hinaus erstreckt.

10. Fräswerkzeug nach einem der Ansprüche 1 bis 9,
**dadurch gekennzeichnet,**
**dass** die Umfangsschneide (9) an einem Schneideneck (8) an die Stirnschneide (7) grenzt.

11. Fräswerkzeug nach Anspruch 10,
**dadurch gekennzeichnet,**
**dass** das Schneideneck (8), bezogen auf die Richtung der Werkzeuglängsachse (A), das am weitesten axial vom Schaft (2) beabstandete Teil des Fräskopfes (3, 3a, 3b, 3c) ist.

12. Fräswerkzeug nach einem der Ansprüche 1 bis 11,
**dadurch gekennzeichnet,**
**dass** die Umfangsschneide (9) mit der Werkzeuglängsachse (A) einen Drallwinkel (γ) von mindestens 10° einschließt.

13. Fräswerkzeug nach einem der Ansprüche 1 bis 12,
**dadurch gekennzeichnet,**
**dass** der Fräskopf (3, 3a, 3b, 3c) eine Umfangsstufe (16) aufweist, an welche sich in Richtung zum Schaft (2) hin ein verjüngter Bereich (17) des Fräskopfes (3, 3a, 3b, 3c) anschließt.

14. Fräswerkzeug nach Anspruch 13,
**dadurch gekennzeichnet,**
**dass** die Umfangsschneide (9) an die Umfangsstufe (16) grenzt.

15. Fräswerkzeug nach einem der Ansprüche 1 bis 14,
**gekennzeichnet durch**
eine seitlich am Außenschaft (2a) angeordnete Fluidzufuhröffnung (21a, 21b, 21c).

16. Fräswerkzeug nach einem der Ansprüche 1 bis 15,
**gekennzeichnet durch**
einen schraubenförmigen Fluidkanal (5a, 5b, 5c) zwischen dem Innenschaft (2a) und dem Außenschaft (2b).

17. Fräswerkzeug nach einem der Ansprüche 1 bis 16,
**dadurch gekennzeichnet,**
**dass** der Durchmesser (D_{K}) des Spanabfuhrkanals (11) mindestens 75% des Schaftdurchmessers (D_{S}) beträgt.

18. Fräswerkzeug nach einem der Ansprüche 1 bis 17,
**dadurch gekennzeichnet,**
**dass** die Wandstärke (Wₐ) des Außenschaftes (2a) maximal 10 % des Schaftdurchmessers (D_{S}) beträgt.

19. Fräswerkzeug nach einem der Ansprüche 1 bis 18,
**dadurch gekennzeichnet,**
**dass** die Wandstärke (W_{b}) des Innenschaftes (2b) maximal 10 % des Schaftdurchmessers (D_{S}) beträgt.

20. Fräswerkzeug nach einem der Ansprüche 1 bis 19,
**dadurch gekennzeichnet,**
**dass** die Wandstärke (W_{b}) des Innenschaftes (2b) geringer als die Wandstärke (Wₐ) des Außenschaftes (2a) ist.

## Claims

1. Milling cutter (1) which is rotatable about a tool longitudinal axis (A), comprising
• a sleeve-shaped shank (2) having an internal chip disposal passage (11), extending parallel to the tool longitudinal axis (A), and an extraction opening (12),
• a milling head (3, 3a, 3b, 3c) which is held on the shank (2) coaxially to the tool longitudinal axis (A) and to the shank (2) and has an end cutting edge (7) and a peripheral cutting edge (9) as cutting edges (7, 9), at least one cutting edge (7, 9) forming a positive rake angle (γₐ, γᵣ) at the periphery of the milling head (3, 3a, 3b, 3c),
**characterized in that** the shank (2) is of double-walled design with an inner shank (2b) and an outer shank (2a).

2. Milling cutter according to Claim 1, **characterized in that** the rake angle (γₐ, γᵣ) at the periphery of the milling head (3, 3a, 3b, 3c) is at least 10°.

3. Milling cutter according to Claim 2, **characterized in that** both the rake angle (γₐ) of the end cutting edge (7) and the rake angle (γᵣ) of the peripheral cutting edge (9) at the periphery of the milling head (3, 3a, 3b, 3c) are at least 10°.

4. Milling cutter according to one of Claims 1 to 3, **characterized in that** the milling head (3, 3a, 3b, 3c) is formed in one piece from a cutting material.

5. Milling cutter according to one of Claims 1 to 4, **characterized in that** the diameter (D_{S}) of the shank (2), at least in a region adjoining the milling head (3, 3a, 3b, 3c), is smaller than the diameter (D_{F}) of the milling head (3, 3a, 3b, 3c).

6. Milling cutter according to one of Claims 1 to 5, **characterized in that** the milling head (3, 3a, 3b, 3c) has an opening area (26) for drawing off chips into the chip disposal passage (11), this opening area (26) being at least 35% of the cross-sectional area (F) of the shank (2).

7. Milling cutter according to one of Claims 1 to 6, **characterized in that** the height (H_{F}) of the milling head (3, 3a, 3b, 3c) is at most 50% of the diameter (D_{F}) of the milling head (3, 3a, 3b, 3c).

8. Milling cutter according to one of Claims 1 to 7, **characterized in that** the milling head (3, 3a, 3b, 3c) is of at least three-lobed design.

9. Milling cutter according to one of Claims 1 to 8, **characterized in that** the end cutting edge (7) extends from a margin (15) of the milling head (3, 3a, 3b, 3c) beyond the tool longitudinal axis (A).

10. Milling cutter according to one of Claims 1 to 9, **characterized in that** the peripheral cutting edge (9) adjoins the end cutting edge (7) at a cutting-edge corner (8).

11. Milling cutter according to Claim 10, **characterized in that** the cutting-edge corner (8), relative to the direction of the tool longitudinal axis (A), is that part of the milling head (3, 3a, 3b, 3c) which is at the furthest axial distance from the shank (2).

12. Milling cutter according to one of Claims 1 to 11, **characterized in that** the peripheral cutting edge (9) encloses a helix angle (γ) of at least 10° with the tool longitudinal axis (A).

13. Milling cutter according to one of Claims 1 to 12, **characterized in that** the milling head (3, 3a, 3b, 3c) has a peripheral step (16), adjoining which in the direction of the shank (2) is a narrowed region (17) of the milling head (3, 3a, 3b, 3c).

14. Milling cutter according to Claim 13, **characterized in that** the peripheral cutting edge (9) adjoins the peripheral step (16).

15. Milling cutter according to one of Claims 1 to 14, **characterized by** a fluid feed opening (21a, 21b, 21c) arranged laterally on the outer shank (2a).

16. Milling cutter according to one of Claims 1 to 15, **characterized by** a helical fluid passage (5a, 5b, 5c) between the inner shank (2a) and the outer shank (2b).

17. Milling cutter according to one of Claims 1 to 16, **characterized in that** the diameter (D_{K}) of the chip disposal passage (11) is at least 75% of the shank diameter (D_{S}).

18. Milling cutter according to one of Claims 1 to 17, **characterized in that** the wall thickness (Wₐ) of the outer shank (2a) is at most 10% of the shank diameter (D_{S}).

19. Milling cutter according to one of Claims 1 to 18, **characterized in that** the wall thickness (W_{b}) of the inner shank (2b) is at most 10% of the shank diameter (D_{S}).

20. Milling cutter according to one of Claims 1 to 19, **characterized in that** the wall thickness (W_{b}) of the inner shank (2b) is less than the wall thickness (Wₐ) of the outer shank (2a).

## Revendications

1. Outil de fraisage (1), qui est rotatif autour d'un axe longitudinal d'outil (A), et comprenant,
• un corps allongé (2) en forme de douille avec un canal d'évacuation de copeaux (11) situé à l'intérieur et s'étendant parallèlement à l'axe longitudinal d'outil (A), et avec une ouverture d'aspiration (12),
• une tête de fraisage (3, 3a, 3b, 3c) qui est supportée coaxialement à l'axe longitudinal d'outil (A) et au corps allongé (2) sur ce dernier, et comporte une arête de coupe frontale (7) et une arête de coupe de périphérie (9) en guise d'arêtes de coupe (7, 9), au moins une arête de coupe (7, 9) formant à la périphérie de la tête de fraisage (3, 3a, 3b, 3c) un angle de coupe positif (γₐ, γᵣ),
**caractérisé en ce que** le corps allongé (2) est d'une configuration à double paroi avec un corps allongé intérieur (2b) et un corps allongé extérieur (2a).

2. Outil de fraisage selon la revendication 1, **caractérisé en ce que** l'angle de coupe (γₐ, γᵣ), à la périphérie de la tête de fraisage (3, 3a, 3b, 3c), vaut au moins 10°.

3. Outil de fraisage selon la revendication 2, **caractérisé en ce qu'**aussi bien l'angle de coupe (γₐ) de l'arête de coupe frontale (7) que l'angle de coupe (γᵣ) de l'arête de coupe de périphérie (9), à la périphérie de la tête de fraisage (3, 3a, 3b, 3c), ont une valeur d'au moins 10°.

4. Outil de fraisage selon l'une des revendications 1 à 3, **caractérisé en ce que** la tête de fraisage (3, 3a, 3b, 3c) est réalisée d'une seule pièce en un matériau de coupe.

5. Outil de fraisage selon l'une des revendications 1 à 4, **caractérisé en ce que** le diamètre (D_{S}) du corps allongé (2), au moins dans une zone voisine de la tête de fraisage (3, 3a, 3b, 3c), est inférieur au diamètre (D_{F}) de la tête de fraisage (3, 3a, 3b, 3c).

6. Outil de fraisage selon l'une des revendications 1 à 5, **caractérisé en ce que** la tête de fraisage (3, 3a, 3b, 3c) présente une surface d'ouverture (26) pour l'évacuation de copeaux dans le canal d'évacuation de copeaux (11), qui vaut au moins 35% de la surface de section transversale (F) du corps allongé (2).

7. Outil de fraisage selon l'une des revendications 1 à 6, **caractérisé en ce que** la hauteur (H_{F}) de la tête de fraisage (3, 3a, 3b, 3c) vaut au maximum 50% du diamètre (D_{F}) de la tête de fraisage (3, 3a, 3b, 3c).

8. Outil de fraisage selon l'une des revendications 1 à 7, **caractérisé en ce que** la tête de fraisage (3, 3a, 3b, 3c) est d'une configuration à au moins trois ailes.

9. Outil de fraisage selon l'une des revendications 1 à 8, **caractérisé en ce que** l'arête de coupe frontale (7) s'étend d'un bord (15) de la tête de fraisage (3, 3a, 3b, 3c) jusqu'au-delà de l'axe longitudinal d'outil (A).

10. Outil de fraisage selon l'une des revendications 1 à 9, **caractérisé en ce que** l'arête de coupe de périphérie (9) est adjacente de l'arête de coupe frontale (7) au niveau d'un sommet d'arête de coupe (8).

11. Outil de fraisage selon la revendication 10, **caractérisé en ce que** le sommet d'arête de coupe (8) est, en se référant à la direction de l'axe longitudinal d'outil (A), la partie de la tête de fraisage (3, 3a, 3b, 3c) qui est la plus éloignée axialement du corps allongé (2).

12. Outil de fraisage selon l'une des revendications 1 à 11, **caractérisé en ce que** l'arête de coupe de périphérie (9) forme avec l'axe longitudinal d'outil (A), un angle d'hélice (γ) d'au moins 10°.

13. Outil de fraisage selon l'une des revendications 1 à 12, **caractérisé en ce que** la tête de fraisage (3, 3a, 3b, 3c) présente un gradin ou décrochement périphérique (16) auquel se raccorde en direction du corps allongé (2) une zone rétrécie (17) de la tête de fraisage (3, 3a, 3b, 3c).

14. Outil de fraisage selon la revendication 13, **caractérisé en ce que** l'arête de coupe de périphérie (9) aboutit dans le gradin périphérique (16).

15. Outil de fraisage selon l'une des revendications 1 à 14, **caractérisé par** une ouverture d'amenée de fluide (21a, 21b, 21c) agencée latéralement sur le corps allongé extérieur (2a).

16. Outil de fraisage selon l'une des revendications 1 à 15, **caractérisé par** un canal de fluide (5a, 5b, 5c) en forme d'hélice entre le corps allongé intérieur (2b) et le corps allongé extérieur (2a).

17. Outil de fraisage selon l'une des revendications 1 à 16, **caractérisé en ce que** le diamètre (D_{K}) du canal d'évacuation de copeaux (11) vaut au moins 75% du diamètre (D_{S}) du corps allongé.

18. Outil de fraisage selon l'une des revendications 1 à 17, **caractérisé en ce que** l'épaisseur de paroi (Wₐ) du corps allongé extérieur (2a) vaut au maximum 10% du diamètre (D_{S}) du corps allongé.

19. Outil de fraisage selon l'une des revendications 1 à 18, **caractérisé en ce que** l'épaisseur de paroi (W_{b}) du corps allongé intérieur (2b) vaut au maximum 10% du diamètre (D_{S}) du corps allongé.

20. Outil de fraisage selon l'une des revendications 1 à 19, **caractérisé en ce que** l'épaisseur de paroi (W_{b}) du corps allongé intérieur (2b) est plus petite que l'épaisseur de paroi (Wₐ) du corps allongé extérieur (2a).
